(19) **Europäisches Patentamt / European Patent Office / Office européen des brevets**

(11) **EP 4 534 571 A1**

(12) **EUROPEAN PATENT APPLICATION**

(43) Date of publication:
09.04.2025 Bulletin 2025/15

(21) Application number: 24174290.7

(22) Date of filing: 06.05.2024

(51) International Patent Classification (IPC):
$C08F\ 110/02$ (2006.01)    $C08F\ 4/651$ (2006.01)

(52) Cooperative Patent Classification (CPC):
(C-Sets available)
C08F 110/02; C08F 2410/06      (Cont.)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 05.10.2023 KR 20230132281

(71) Applicants:
• SK Innovation Co., Ltd.
Seoul 03188 (KR)
• SK Geo Centric Co., Ltd.
Jongno-gu
Seoul 03161 (KR)

(72) Inventors:
• KIM, Dong Kou
34124 Daejeon (KR)
• KANG, Mun Hyung
34124 Daejeon (KR)
• EO, Maeng Sun
34124 Daejeon (KR)
• SUDEVAN, Sujith
34124 Daejeon (KR)

(74) Representative: Frick, Robert
Lorenz Seidler Gossel
Rechtsanwälte Patentanwälte
Partnerschaft mbB
Widenmayerstraße 23
80538 München (DE)

(54) **METHOD FOR PREPARING POLYETHYLENE POLYMERIZATION CATALYST**

(57) is the present invention relates to a method for preparing a polyethylene polymerization catalyst, the method including: including a first mixed solution preparation step of mixing a magnesium compound, a first hydrocarbon compound, and alcohol to prepare a first mixed solution; a viscosity adjustment step of adding a second hydrocarbon compound to the first mixed solution to adjust a viscosity of the first mixed solution; a second mixed solution preparation step of adding a first internal electron donor to the first mixed solution having an adjusted viscosity to prepare a second mixed solution; and a recrystallization step of adding a transition metal compound to the second mixed solution to perform recrystallization.

EP 4 534 571 A1

(52) Cooperative Patent Classification (CPC): (Cont.)

C-Sets
**C08F 110/02, C08F 4/651;**
**C08F 110/02, C08F 4/6543**

# EP 4 534 571 A1

**Description**

**BACKGROUND OF THE INVENTION**

**Field of the Invention**

The present invention relates to a method for preparing a polyethylene polymerization catalyst.

**Description of Related Art**

Polymer particles which are polymerized using a Ziegler-Natta catalyst are influenced by a commonly used catalyst. Therefore, a technology of adjusting the size and shape (morphology) of the Ziegler-Natta catalyst during preparation of the catalyst has a big influence on polymer particles and becomes an important key to produce a desired polymer. In particular, when preparing LiBS, a resin used herein should go through a stretching process after oil kneading, and thus, the size and distribution of the resin are very important factors.

A conventional technology for adjusting the size and shape of the catalyst includes dissolving a carrier in a soluble solvent and then performing recrystallization. In the recrystallization technology, a soluble solvent such as alcohol, aldehyde, and amine is often used since a magnesium compound which is one of the most often used carriers has a high solubility in these solvents.

Among them, alcohol completely dissolves the magnesium compound at a high temperature of 100°C or higher when it is used with a hydrocarbon solvent such as decane, and is present in a mixed solution state in which the magnesium compound is not reprecipitated even at room temperature. The mixed solution may be treated by various methods to prepare a solid component catalyst.

However, when a temperature is lowered for recrystallization when using alcohol in order to completely dissolve magnesium chloride at a high temperature, cavitation may occur during stirring.

A solvent may be added for preventing occurrence of the cavitation during stirring, but when the solvent is added, the catalyst size is increased and the catalyst shape becomes poor, so that a desired catalyst size or an excellent catalyst shape may not be obtained. Besides, problems such as cost arise due to an increased amount of solvent used.

In addition, the timing of adding a transition metal compound during recrystallization is an important step of forming a catalyst seed, and since the catalyst size and shape vary too much depending on a temperature and a titration time, it is difficult to obtain the desired size and shape of a catalyst.

Development of a technology to solve the above problems is needed.

**SUMMARY OF THE INVENTION**

The present invention aims to provide a polyethylene polymerization catalyst having a uniform catalyst size and an excellent catalyst shape by primarily controlling a catalyst shape by adjusting the viscosity of a first mixed solution before adding an internal electron donor.

The present invention further aims to provide a uniform catalyst size and an excellent catalyst shape easily and conveniently without controlling other various variables in a catalyst preparation method by controlling only a viscosity variable of a first mixed solution during preparation of a polyethylene polymerization catalyst.

The present invention yet further aims to provide a method for preparing a polyethylene polymerization catalyst having excellent economic feasibility by decreasing an amount of solvent used.

The present invention yet further aims to provides a polymer having a uniform particle size and an excellent flowability by controlling an active site of a catalyst.

Also, cavitation, which occurs during stirring in known methods for preparing a polyethylene polymerization catalyst, shall preferably be avoided.

The present invention also aims to provide a desired catalyst size and a desired catalyst shape by easily controlling a recrystallization step of forming a catalyst seed by adding a transition metal compound.

In addition, the present invention aims to provide a polyethylene having a more uniform particle size than the particle size at the time of preparing polyethylene.

Also, some embodiments of the present invention may lead to an increase in a molecular weight of a polymer conveniently while using a conventional catalyst preparation method.

Against this background, the present invention relates to a method for preparing a polyethylene polymerization catalyst, the method comprising: a first mixed solution preparation step of mixing a magnesium compound, a first hydrocarbon compound, and alcohol to prepare a first mixed solution; a viscosity adjustment step of adding a second hydrocarbon compound to the first mixed solution to adjust a viscosity of the first mixed solution; a second mixed solution preparation step of adding a first internal electron donor to the first mixed solution having an adjusted viscosity to prepare a second mixed solution; and a recrystallization step of adding a transition metal compound to the second mixed solution to perform recrystallization.

In t some embodiments, in the viscosity adjustment step, a viscosity range of the first mixed solution at 25°C may be 10 cP to 70 cP.

In some embodiments, the method may further comprise a washing step of washing with the second hydrocarbon compound after the recrystallization step.

The method of some embodiments may further comprise a slurry catalyst preparation step of adding the second hydrocarbon compound to prepare a slurry catalyst after the washing step.

In some embodiments, a second internal electron donor may be further added after adding the transition metal compound.

In some embodiments, a mole ratio between the magnesium compound and the second internal electron donor may be 1:0.01 to 1:1.

In some embodiments, a mole ratio between the magnesium compound and the second hydrocarbon compound may be 1:1.5 to 1:5.

In some embodiments, the alcohol may comprise or be at least one selected from the group consisting of 2-ethylhexanol, methanol, ethanol, propanol, butanol, pentanol, cyclopentanol, hexanol, heptanol, octanol, decanol, dodecanol, 2-methylpentanol, 2-ethylbutanol, cyclohexanol, methylcyclohexnaol, methylbenzyl alcohol and mixtures thereof.

In some embodiments, the first hydrocarbon compound may be a C9 to C30 hydrocarbon.

In some embodiments, the second hydrocarbon compound may be a C3 to C8 hydrocarbon.

In some embodiments, the first internal electron donor or the second internal electron donor may be independently of each other at least one selected from the group consisting of ethyl benzoate, methyl benzoate, ethyl p-methoxybenzoate, methyl p-ethoxybenzoate, ethyl p-ethoxybenzoate, ethyl p-chlorobenzoate, diisobutyl phthalate, 9,9-bis(methoxymethyl)fluorene, propyl benzoate, isopropyl benzoate, dibutyl benzoate, dibutyl 4-(2-aminoethyl) benzoate, ethyl 4-(dimethylamino) benzoate, ethyl 4-(butylamino) benzoate, ethyl 4-(bromomethyl) benzoate, ethyl 4-(benzyloxy) benzoate, methyl 4-(hydroxymethyl) benzoate, methyl 4-(aminomethyl) benzoate, methyl 3-(aminocarbonyl) benzoate, methyl 4-(2-hydroxyethoxy) benzoate, methyl 4-(cyanomethyl) benzoate, methyl 4-(bromomethyl) benzoate, methyl 3-(bromomethyl) benzoate, 1,2-dimethoxybenzene, 1,2-diethoxybenzene, 1,2-dibutoxybenzene, 1,2-di-sec-butoxybenzene, 1,2-di-tert-butoxybenzene, tetramethoxysilane, tetraethoxysilane, tetrapropoxysilane, tetrabutoxysilane, ethyltrimethoxysilane, ethyltriethoxysilane, vinyltrimethoxysilane, methyltrimethoxysilane, n-propyltriethoxysilane, decyltrimethoxysilane, cyclopentyltrimethoxysilane, 2-methylcyclopentyltrimethoxysilane, 2,3-dimethylcyclopentyltrimethoxysilane, phenyltrimethoxysilane, vinyltriethoxysilane, t-butyltriethoxysilane, n-butyltriethoxysilane, isobutyltriethoxysilane, decyltriethoxysilane, cyclopentyltriethoxysilane, cyclohexyltriethoxysilane, chlorotriethoxysilane, ethyltriisopropoxysilane, vinyltributoxysilane, trimethylphenoxysilane, methyltriallyloxysilane, vinyltriacetoxysilane, dimethylmethoxysilane, diisopropyldimethoxysilane, t-butylmethyldimethoxysilane, dicyclopentyldimethoxysilane, dicyclohexyldimethoxysilane, cyclohexylmethyldimethoxysilane, diphenyldimethoxysilane, cyclopentyldimethoxysilane and mixtures thereof.

In some embodiments, a mole ratio between the magnesium compound and the first internal electron donor may be 1:0.01 to 1:0.3.

In some embodiments, a mole ratio between the magnesium compound and the transition metal compound may be 1:2 to 1:5.

In some embodiments, the recrystallization step may be performed at -7 to 7°C.

The invention further relates to a method for preparing polyethylene, the method comprising: A method for preparing polyethylene, the method comprising: providing a polyethylene polymerization catalyst prepared according to the method of the invention as described above; and polymerizing a monomer using the polyethylene polymerization catalyst, to obtain polyethylene.

Other preferred features and aspects will be apparent from the following detailed description, the drawings, and the claims.

## BRIEF DESCRIPTION OF THE DRAWINGS

FIG. 1 shows a scanning electron microscope (SEM) image of a catalyst prepared according to Example 1 of the present invention.
FIG. 2 shows a scanning electron microscope (SEM) image of a catalyst prepared according to Example 2 of the present invention.
FIG. 3 shows a scanning electron microscope (SEM) image of a catalyst prepared according to Example 3 of the present invention.

FIG. 4 shows a scanning electron microscope (SEM) image of a catalyst prepared according to Comparative Examples 1 of the present invention.

FIG. 5 shows a scanning electron microscope (SEM) image of a catalyst prepared according to Comparative Examples 2 of the present invention.

FIG. 6 shows a scanning electron microscope (SEM) image of a catalyst prepared according to Comparative Examples 3 of the present invention.

FIG. 7 shows a scanning electron microscope (SEM) image of a catalyst prepared according to Comparative Examples 4 of the present invention.

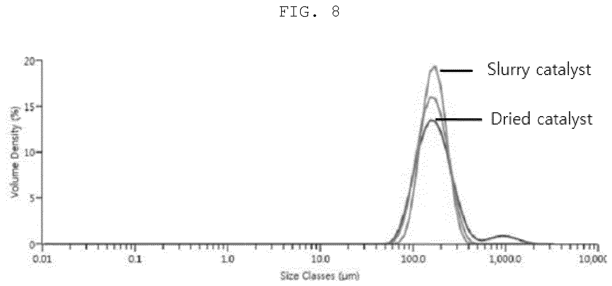

FIG. 8 is a graph showing polymer particle size distributions of a slurry catalyst and a dried catalyst according to an exemplary embodiment of the present invention.

## DESCRIPTION OF THE INVENTION

The unit of % used in the present specification without particular mention refers to % by weight, unless otherwise defined.

In the present specification, a range of "A to B" refers to "A or more and B or less", unless otherwise particularly defined.

The term "$C_A$-$C_B$" in the present specification refers to "the number of carbons being A or more and B or less".

As used herein, "polyethylene" is a polymer polymerized from a monomer comprising ethylene, optionally with one or more comonomers. In some embodiments, the monomer comprises ethylene, optionally with one or more comonomers. For example, the polyethylene may be a polymer polymerized from ethylene monomer, a polymer polymerized from monomer(s) comprising ethylene, or a polymer polymerized from monomer(s) comprising ethylene and other comonomer(s) such as aliphatic unsaturated hydrocarbons (olefin, diene) and the like. In some embodiments, the comonomer may be any one or more comonomers selected from propylene, 1-butene, 1-pentene, 4-methyl-1-pentene, 1-hexene, 1-heptene, and/or 1-octene, and for example, any one or more comonomers selected from 1-hexene, 1-heptene, and 1-octene.

Hereinafter, the method for preparing a polyethylene polymerization catalyst and a method for preparing polyethylene of the present disclosure will be described in detail.

The present invention provides a method for preparing a polyethylene polymerization catalyst, the method comprising: a first mixed solution preparation step of mixing a magnesium compound, a first hydrocarbon compound, and alcohol to prepare a first mixed solution; a viscosity adjustment step of adding a second hydrocarbon compound to the first mixed solution to adjust a viscosity of the first mixed solution; a second mixed solution preparation step of adding a first internal electron donor to the first mixed solution having an adjusted viscosity to prepare a second mixed solution; and a recrystallization step of adding a transition metal compound to the second mixed solution to perform recrystallization.

The method according to some embodiments may produce a polyethylene polymerization catalyst having a uniform catalyst size and/or an excellent catalyst shape by primarily controlling a catalyst shape by adjusting the viscosity of a first mixed solution before adding an electron donor.

The method according to some embodiments may obtain a catalyst showing a uniform catalyst size and an excellent catalyst shape easily and conveniently without controlling other variables in a catalyst preparation method by controlling only a viscosity variable of a first mixed solution during preparation of a polyethylene polymerization catalyst.

In the method according to some embodiments, in the viscosity adjustment step before adding an internal electron donor, a second hydrocarbon compound is added to the first mixed solution to primarily control a catalyst shape. When the internal electron donor is added to the first mixed solution having an adjusted viscosity, dispersibility of the internal electron donor in the first mixed solution may be increased to easily control an active site and obtain a catalyst showing an excellent catalyst shape.

The method according to some embodiments may provide a method for preparing a polyethylene polymerization catalyst having excellent economic feasibility by decreasing an amount of a solvent used. In the method for preparing a polyethylene polymerization catalyst, when an amount of a solvent such as a hydrocarbon compound used is increased, process economic feasibility is deteriorated. The method according to some embodiments may provide a catalyst preparation method having excellent economic feasibility by obtaining an excellent catalyst shape and also decreasing the amount of the solvent used.

In the method according to some embodiments, the viscosity of the first mixed solution is adjusted before adding the internal electron donor, thereby primarily controlling a catalyst shape to control an active site of a catalyst and preparing a polymer having a uniform particle size and an excellent flowability.

The method may obtain a catalyst showing an excellent catalyst shape and a uniform catalyst size by adjusting the viscosity of the first mixed solution before adding the internal electron donor to prevent cavitation which occurs during stirring.

The method may obtain a desired catalyst size and a desired catalyst shape easily by controlling a recrystallization step of forming a catalyst seed by adding a transition metal compound. Usually, in the recrystallization step, the size and shape of the catalyst vary too much depending on a temperature or an addition time of a transition metal compound, so that it is difficult to obtain a desired catalyst size and a desired catalyst shape. The method according to some embodiments has an effect of easily obtaining a catalyst showing a desired catalyst size and shape, by primarily controlling a catalyst shape by adjusting the viscosity of the first mixed solution in the viscosity adjustment step after preparing the first mixed solution and then going through the recrystallization step.

According to some embodiments, in the method for preparing a polyethylene polymerization catalyst, a viscosity range of the first mixed solution at 25°C in the viscosity adjustment step may be 10 cP or more, 11 cP or more, 13 cP or more, 15 cP or more, 20 cP or more, 25 cP or more, 30 cP or more, 40 cP or more, 50 cP or more, 60 cP or more, 65 cP or more, 70 cP or less, 60 cP or less, 50 cP or less, 40 cP or less, 30 cP or less, 25 cP or less, 20 cP or less, 15 cP or less, 13 cP or less, 11 cP or less, or a value between the numerical values, for example 10 to 70 cP, 10 to 30 cP, 20 to 70 cP, or 15 to 30 cP.

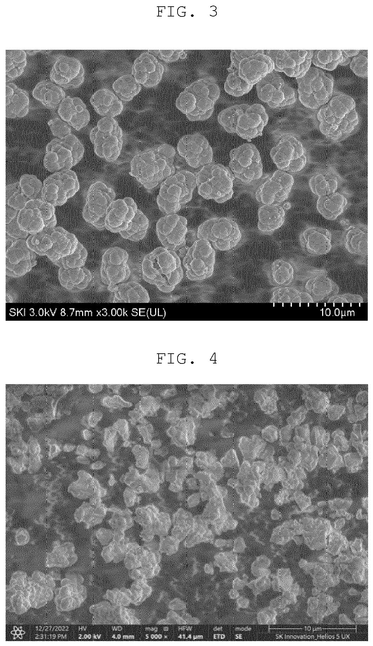

In the viscosity adjustment step, when the viscosity of the first mixed solution at 25°C is more than 70 cP, the catalyst shape is poor and the catalyst size is not uniform. This may be confirmed in FIG. 4. When the viscosity of the first mixed solution at 25°C is more than 70 cP, cavitation occurs during stirring, so that the control of catalyst shape and size is not performed well.

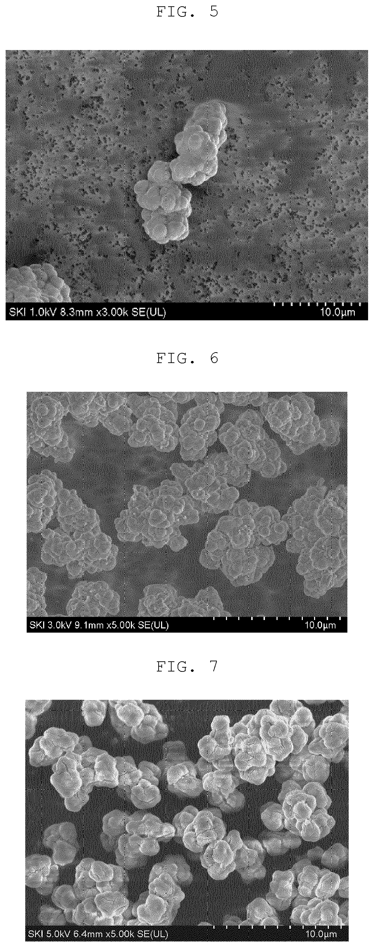

When the viscosity of the first mixed solution at 25°C in the viscosity adjustment step is less than 10 cP, a non-uniform and poor catalyst shape is confirmed. This may be confirmed in FIG. 5. When the viscosity of the first mixed solution at 25°C is less than 10 cP, the viscosity of the first mixed solution is too low and stirring efficiency is low.

Besides, in the viscosity adjustment step, when the second hydrocarbon is added, the viscosity of the first mixed solution at 25°C should be adjusted to 10 cP or more, and thus, the second hydrocarbon is prevented from being added in an excessive amount and process economic feasibility during catalyst preparation may be improved.

In some embodiments, the magnesium compound has no reducibility, and for example, may be one or two or more of magnesium halides such as magnesium chloride, magnesium bromides, magnesium fluorides, and magnesium iodide; magnesium alkoxyhalides such as magnesium methoxychloride, magnesium ethoxychloride, magnesium isopropoxychloride, magnesium butoxychloride, and/or magnesium octoxychloride; alkoxymagnesium such as ethoxymagnesium, isoproxymagnesium, and/or butoxymagnesium, and/or the like, and these magnesium compounds may be used as a mixture of two or more. In some embodiments, the magnesium compound may be a magnesium halide, or magnesium chloride.

According to some embodiments, the alcohol may be at least one selected from the group consisting of 2-ethylhexanol, methanol, ethanol, propanol, butanol, pentanol, cyclopentanol, hexanol, heptanol, octanol, decanol, dodecanol, 2-methylpentanol, 2-ethylbutanol, cyclohexanol, methylcyclohexnaol, methylbenzyl alcohol, and mixtures thereof. In some embodiments, the alcohol may be 2-ethylhexanol. The alcohol may bind to the magnesium compound to form pores and affect catalyst performance.

According to some embodiments, the first mixed solution may be formed by simply mixing and/or stirring the magnesium compound, the first hydrocarbon compound, and alcohol, but heating may be very helpful in dissolution of the magnesium compound. In some embodiments, the dissolution temperature may be 100 to 150°C.

In some embodiments, a mole ratio between the magnesium compound and the alcohol may be 1:0.5 to 1:10, or 1:1 to 1:5. Dissolution of the magnesium compound is easier at a higher mole ratio of alcohol or at a higher dissolution temperature.

In some embodiments, the method may further comprise a washing step of washing with the second hydrocarbon compound after the recrystallization step.

In some embodiments, the method may further comprise a slurry catalyst preparation step of adding the second hydrocarbon compound to prepare a slurry catalyst after the washing step.

When polyethylene is prepared using the slurry catalyst prepared by the method for preparing a polyethylene polymerization catalyst, polyethylene having a more uniform particle size may be obtained as confirmed in FIG. 9.

In some embodiments, a second internal electron donor may be further added after adding the transition metal compound.

In some embodiments, the second internal electron donor may be further added after adding the transition metal compound, thereby making the active site of the catalyst be uniform only with further addition of the second internal electron donor without changing a conventional catalyst preparation method to conveniently increase the molecular weight of a polymer. This means that the molecular weight of a polymer may be conveniently adjusted only by further adding a second internal electron donor without changing the recipe of the conventional catalyst preparation method.

According to some embodiments, the first hydrocarbon compound may be a C9 to C30 hydrocarbon. For example, the first hydrocarbon compound may be at least one selected from the group consisting of decane, benzene, toluene, xylene, ethylbenzene, dodecane, tetradecane, cyclohexane, cyclooocxtane, methyl cyclopentane, methylcyclohexane and mixtures thereof. In some embodiments, the first hydrocarbon compound may be decane. The first hydrocarbon compound disperses the magnesium compound in the first mixed solution.

In some embodiments, a mole ratio between the magnesium compound and the first hydrocarbon compound may be 1:0.1 to 1:10, or 1:1 to 1:5.

In some embodiments, the second hydrocarbon compound may be a C3 to C8 hydrocarbon. For example, the second hydrocarbon compound may be at least one selected from the group consisting of propane, butane, pentane, hexane, heptane, octane and mixtures thereof. In some embodiments, the second hydrocarbon compound may be hexane.

In some embodiments, a mole ratio between the magnesium compound and the second hydrocarbon compound of the present disclosure may be 1:1.5 to 1:5, or 1:2 to 1:5, or 1:4 to 1:5, or 1:2.5 to 1:4.

As the mole ratio of the second hydrocarbon compound to the magnesium compound is higher, a tendency to increase in a catalyst particle size is usually shown. This seems to be because as the mole ratio of the second hydrocarbon compound is higher, a recrystallization rate, stirring efficiency, or the like in the recrystallization step is affected. The catalyst particle size may be easily adjusted by adjusting the mole ratio of the second hydrocarbon compound to the magnesium compound.

In some embodiments, the first internal electron donor or the second internal electron donor may be independently of each other at least one selected from the group consisting of ethyl benzoate, methyl benzoate, ethyl p-methoxybenzoate, methyl p-ethoxybenzoate, ethyl p-ethoxybenzoate, ethyl p-chlorobenzoate, diisobutyl phthalate, 9,9-bis(methoxymethyl)fluorene, propyl benzoate, isopropyl benzoate, dibutyl benzoate, dibutyl 4-(2-aminoethyl) benzoate, ethyl 4-(dimethylamino) benzoate, ethyl 4-(butylamino) benzoate, ethyl 4-(bromomethyl) benzoate, ethyl 4-(benzyloxy) benzoate, methyl 4-(hydroxymethyl) benzoate, methyl 4-(aminomethyl) benzoate, methyl 3-(aminocarbonyl) benzoate, methyl 4-(2-hydroxyethoxy) benzoate, methyl 4-(cyanomethyl) benzoate, methyl 4-(bromomethyl) benzoate, methyl 3-(bromomethyl) benzoate, 1,2-dimethoxybenzene, 1,2-diethoxybenzene, 1,2-dibutoxybenzene, 1,2-di-sec-butoxybenzene, 1,2-di-tert-butoxybenzene, tetramethoxysilane, tetraethoxysilane, tetrapropoxysilane, tetrabutoxysilane, ethyltrimethoxysilane, ethyltriethoxysilane, vinyltrimethoxysilane, methyltrimethoxysilane, n-propyltriethoxysilane, decyltrimethoxysilane, cyclopentyltrimethoxysilane, 2-methylcyclopentyltrimethoxysilane, 2,3-dimethylcyclopentyltrimethoxysilane, phenyltrimethoxysilane, vinyltriethoxysilane, t-butyltriethoxysilane, n-butyltriethoxysilane, isobutyltriethoxysilane, decyltriethoxysilane, cyclopentyltriethoxysilane, cyclohexyltriethoxysilane, chlorotriethoxysilane, ethyltriisopropoxysilane, vinyltributoxysilane, trimethylphenoxysilane, methyltriallyloxysilane, vinyltriacetoxysilane, dimethylmethoxysilane, diisopropyldimethoxysilane, t-butylmethyldimethoxysilane, dicyclopentyldimethoxysilane, dicyclohexyldimethoxysilane, cyclohexylmethyldimethoxysilane, diphenyldimethoxysilane, cyclopentyldimethoxysilane and mixtures thereof. In some embodiments, the first internal electron donor or the second internal electron donor may be ethyl benzoate and/or methyl benzoate, respectively. The internal electron donor donates an electron to a transition metal compound to stabilize the active site of the transition metal compound.

In some embodiments, a mole ratio between the magnesium compound and the first internal electron donor may be 1:0.01 to 1:0.3, or 1:0.05 to 1:0.20.

In some embodiments, a mole ratio between the magnesium compound and the second internal electron donor may be 1:0.001 to 1:1, or 1:0.01 to 1:0.2.

In some embodiments, the transition metal compound may be one or more titanium tetrahalides such as $TiCl_4$, $TiBr_4$, or $TiI_4$; alkoxy titanium trihalides such as $Ti(OCH_3)Cl_3$, $Ti(OC_2H_5)Cl_3$, or $Ti(OC_2H_5)Br_3$; alkoxy titanium dihalides such as $Ti(OCH_3)_2Cl_2$, $Ti(OC_2H_5)_2Cl_2$, or $Ti(OC_2H_5)_2Br_2$; alkoxy trititanium halides such as $Ti(OCH_3)_3Cl$, $Ti(OC_2H_5)_3Cl$, or $Ti(OC_2H_5)_3Br$, and the like, or mixtures thereof, or may be $TiCl_4$ (titanium tetrachloride).

In some embodiments, a mole ratio between the magnesium compound and the transition metal compound may be 1:1 to 1:7, or 1:2 to 1:5. When the mole ratio of the transition metal compound to the magnesium compound is more than 1:7, a ratio of the transition metal compound remaining in a polymer is increased which may cause an environmental pollution problem.

In some embodiments, the recrystallization step may be performed at -7 to 7°C, specifically -5 to 5°C.

When the recrystallization step is performed at higher than 7°C, an excessively bulky catalyst shape is shown and a catalyst size is not uniform. This may be confirmed in FIG. 6, and seems to be because the temperature in the recrystallization step is high, so that the temperature is not controlled when reaction heat occurs and recrystallization proceeds rapidly, and thus, a growth rate of catalyst particles is too high and recrystallization is not uniform.

Also, when the recrystallization step is performed at lower than -7°C, a non-uniform and poor catalyst shape is confirmed. This may be confirmed in FIG. 7, and seems to be because as the temperature is lowered, the viscosity of the mixed solution is increased to deteriorate stirring efficiency and recrystallization is not uniform due to a difference in concentration by bubbles caused by cavitation occurring during stirring.

In some embodiments, a dropping time of the transition metal compound may be 0.5 to 4 hours, or 1 to 2 hours.

In some embodiments, the recrystallization step may be performed under stirring at a stirring speed of 50 to 2000 rpm, or 100 to 700 rpm, or 100 to 500 rpm. When the stirring speed is too slow, catalyst particles agglomerate and it is difficult to obtain an excellent uniform catalyst shape. However, as the stirring speed is increased, stirring efficiency is increased and a tendency to improve the catalyst shape and decrease a catalyst particle size is shown.

In some embodiments, the method may further comprise heating after the recrystallization step. The heating may be performed at 0.1 to 2°C/min, or 0.2 to 1°C/min. In some embodiments, the heating may be performed twice at different heating rates from each other. For example, heating to 20°C at a rate of 0.5°C/min and then heating to 80°C at a rate of 1.0°C/min may be performed. In some embodiments, the heating may be performed to 70 to 90°C. When the heating proceeds at a higher rate, the catalyst may break or clump to adversely affect the catalyst shape. Thereafter, in some embodiments, the temperature may be maintained for 2 to 4 hours for stabilization of the catalyst.

In some embodiments, the method may further comprise reacting the catalyst prepared through the recrystallization step with an alkylaluminum compound, such as for example triethylaluminum.

The present invention further relates to a method for preparing polyethylene, the method including: providing a polyethylene polymerization catalyst prepared according to the method of the invention as described herein; and polymerizing a monomer using the polyethylene polymerization catalyst, to obtain polyethylene.

In some embodiments, the method for preparing polyethylene may produce a polymer having a uniform particle size and/or an excellent flowability by controlling an active site of a polyethylene polymerization catalyst.

The method for preparing polyethylene may obtain polyethylene having a more uniform particle size than the particle size at the time of preparing polyethylene by using a slurry catalyst prepared by the method for preparing a polyethylene polymerization catalyst.

The method for preparing polyethylene may conveniently increase the molecular weight of the polymer only by further adding an internal electron donor while using a conventional catalyst preparation method during polyethylene preparation, by using the polyethylene polymerization catalyst prepared by the method for preparing a polyethylene polymerization catalyst.

Hereinafter, the present invention will be further described with reference to the specific experimental examples.

Evaluation Examples

[Measurement method]

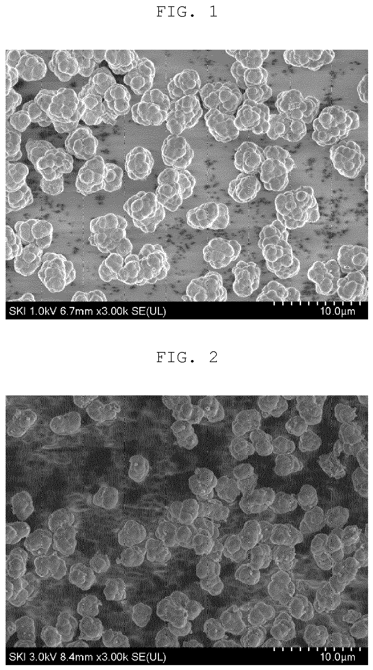

A catalyst shape and a polyethylene shape prepared by the following examples and comparative examples were observed with an electron microscope (SEM, scanning electron microscope, SU8230, available from Hitachi) and are shown in FIGS. 1 to 7.

The distribution and particle size of the catalyst and the polymer were measured with a laser particle analyzer (Mastersizer 3000; available from Malvern Instruments) by a light transmission method. A cumulative distribution of the particle size was obtained therefrom, and the average particle diameter and the particle size distribution index of the particles were determined as follows and are shown in Table 1.

Average particle diameter (D50): particle size corresponding to 50% of cumulative weight
Particle size distribution index (SPAN): $P = (D90-D10)/D50$

wherein D90 is a particle size corresponding to 90% of the cumulative weight, and D10 is a particle size corresponding to 10% of the cumulative weight.

Regarding a polymer molecular weight conversion, a $\eta$ value was analyzed using Crystex42 (available from Polymer Char) which is intrinsic viscosity ($\eta$) measuring equipment and then the value was substituted into a Mark-Honwink equation to derive a converted molecular weight.

$$\text{Mark-Honwink Equation, } Mv = 5.37 \times 10^4 [\eta]^{1.49}$$

**[Example 1]**

**Catalyst preparation**

5 g of magnesium chloride, 24.7 ml of 2-ethylhexanol, and 25 ml of decane were added to a stirrable 500 ml reactor, and stirring was performed at 50°C at 300 rpm to prepare a first mixed solution. The first mixed solution was heated to 135°C and the reaction was maintained for 2 hours. Thereafter, the temperature was lowered to 60°C, 20 ml of hexane was added, and the temperature was maintained for 30 minutes. The temperature was lowered to 25°C, 0.55 ml of ethyl benzoate was added to the first mixed solution having a viscosity of 20.34 cP adjusted by the added hexane, and the temperature was maintained for 30 minutes. Thereafter, the temperature was lowered to 2°C, and 18.43 ml of titanium tetrachloride was slowly added with stirring at 500 rpm. After completing the addition, the temperature was maintained for 30 minutes and raised to 20°C at a rate of 0.5°C/min. Thereafter, the temperature was raised to 80°C at a rate of 1.0°C/min and maintained for 120 minutes. Thereafter, the stirring was stopped, the temperature was lowered to 60°C, the product was washed twice with 120 ml of hexane, the temperature was lowered to 40°C, and the product was washed three times with 120 ml of hexane and then dried to obtain a catalyst.

**Polyethylene preparation**

1.5 L of hexane was added to a 3 L reactor under a nitrogen atmosphere. Subsequently, 1.0 mmol of triethyl aluminum diluted in hexane was added, and 5 mg of the catalyst prepared above was added. The reactor temperature was raised to 80°C with stirring at 500 rpm. Thereafter, 5.0 bar of ethylene was supplied and the pressure was maintained. Polymerization was continued for 90 minutes, ethylene was supplied, and the pressure was maintained constant. After completing the reaction, filtration under reduced pressure was performed to remove the solvent, and the product was dried in a vacuum oven to obtain polyethylene.

**[Example 2]**

The process was performed in the same manner as in Example 1, except that 10 ml of hexane was added to adjust the viscosity of the first mixed solution at 25°C to 44.65 cP.

**[Example 3]**

The process was performed in the same manner as in Example 1, except that 30 ml of hexane was added to adjust the viscosity of the first mixed solution at 25°C to 11.68 cP.

**[Comparative Example 1]**

The process was performed in the same manner as in Example 1, except that hexane was not added and the viscosity of the first mixed solution was not adjusted.

**[Comparative Example 2]**

The process was performed in the same manner as in Example 1, except that 40 ml of hexane was added to adjust the viscosity of the first mixed solution at 25°C to 9.17 cP.

**[Comparative Example 3]**

The process was performed in the same manner as in Example 1, except that the temperature in the recrystallization step was 10°C, not 2°C.

**[Comparative Example 4]**

The process was performed in the same manner as in Example 1, except that the temperature in the recrystallization step was -10°C, not 2°C.

The average particle diameter and the particle size distribution SPAN of the catalysts prepared according to the examples and the comparative examples were measured, the catalyst shape (morphology) was confirmed, and is shown in the following Table 1.

[Table 1]

| Classificat ion | Viscosity of first mixed solution at 25°C (cP) | Recrystalli zation temperature (°C) | Average particle diameter of catalyst ($\mu$m) | Particle size distribu tion index of catalyst | Catalyst shape |
|---|---|---|---|---|---|
| Example 1 | 20.34 | 2 | 4.9 | 0.55 | FIG. 1 |
| Example 2 | 44.65 | 2 | 3.5 | 0.69 | FIG. 2 |
| Example 3 | 11.68 | 2 | 5.5 | 0.65 | FIG. 3 |
| Comparative Example 1 | 73.19 | 2 | 4.0 | 1.48 | FIG. 4 |

(continued)

| Classificat ion | Viscosity of first mixed solution at 25°C (cP) | Recrystalli zation temperature (°C) | Average particle diameter of catalyst ($\mu$m) | Particle size distribu tion index of catalyst | Catalyst shape |
|---|---|---|---|---|---|
| Comparative Example 2 | 9.17 | 2 | 7.0 | 0.92 | FIG. 5 |
| Comparative Example 3 | 19.84 | 10 | 5.5 | 0.96 | FIG. 6 |
| Comparative Example 4 | 20.84 | -10 | 4.3 | 0.90 | FIG. 7 |

It was confirmed that the catalyst prepared according to Example 3 showed a uniform and nearly spherical, excellent catalyst shape.

It was confirmed that the catalyst prepared according to Example 2 showed a more uniform and better catalyst shape than the catalyst prepared according to Example 3.

It was confirmed that the catalyst prepared according to Example 1 showed a more uniform and better catalyst shape than the catalysts prepared according to Examples 2 and 3, and had significantly decreased fine powder.

It was confirmed that the catalysts prepared in Comparative Examples 1 and 2 in which the viscosity of the first mixed solution at 25°C was out of the range of 10 to 70 cP and Comparative Examples 3 and 4 in which the recrystallization temperature was out of the range of -7 to 7°C had a catalyst shape which was not close to a sphere and not uniform.

**[Example 4]**

**Slurry catalyst preparation**

The process was performed in the same manner as in Example 1, except that a slurry catalyst was prepared by adding 100 ml of hexane without drying after washing with hexane in the preparation of the catalyst.

As confirmed in FIG. 9, when polyethylene was prepared using the slurry catalyst prepared as in Example 4, polyethylene having a more uniform particle size than the catalyst prepared according to Example 1 was obtained.

**[Example 5]**

The process was performed in the same manner as in Example 1, except that 0.75 ml of ethyl benzoate was further added during the heating after adding titanium tetrachloride in the catalyst preparation.

The molecular weight and the particle size distribution of the obtained polyethylene were measured and are shown in the following Table 2:

[Table 2]

| | Molecular weight conversion | | Particle size distribution ($\mu$m) | | | |
|---|---|---|---|---|---|---|
| | IV | Molecular weight | D10 | D50 | D90 | SPAN |
| Example 1 | 13.4 | 2570000 | 87 | 120 | 200 | 0.94 |
| Example 5 | 16.6 | 3530000 | 90 | 121 | 199 | 0.90 |

As confirmed in Example 5, when ethyl benzoate was further added after adding titanium tetrachloride in the catalyst preparation method of the present invention, the molecular weight of a polymer may be conveniently increased only by further adding ethyl benzoate after adding titanium tetrachloride without separately changing the previous catalyst preparation method.

The method for preparing a polyethylene polymerization catalyst according to some embodiments may produce a polyethylene polymerization catalyst having a uniform catalyst size and/or an excellent catalyst shape by primarily controlling a catalyst shape by adjusting the viscosity of a first mixed solution before adding an internal electron donor.

The method according to the invention may obtain a catalyst showing a uniform catalyst size and/or an excellent catalyst shape easily and conveniently without controlling other various variables in a catalyst preparation method by controlling only a viscosity variable of a first mixed solution during preparation of a polyethylene polymerization catalyst.

The method according to the invention may provide a method for preparing a polyethylene polymerization catalyst having excellent economic feasibility by decreasing an amount of a solvent used.

The method according to the invention may produce a polymer having a uniform particle size and/or an excellent flowability by controlling an active site of a catalyst.

The method according to the invention may prevent cavitation which occurs during stirring.

The method according to the invention may obtain a desired catalyst size and/or a desired catalyst shape easily by easily controlling a recrystallization step of forming a catalyst seed by adding a transition metal compound.

Polyethylene having a more uniform particle size than the particle size at the time of preparing polyethylene may be obtained by using a polyethylene polymerization catalyst prepared by the method for preparing a polyethylene polymerization catalyst according to the method of the present invention.

When polyethylene is prepared using a polyethylene polymerization catalyst prepared by the method for preparing a polyethylene polymerization catalyst according to the present invention, the molecular weight of a polymer may be conveniently increased while using a common catalyst preparation method.

A catalyst prepared by the method according to the present invention may be used in production of an eco-friendly polymer.

**Claims**

1. A method for preparing a polyethylene polymerization catalyst, the method comprising:

   a first mixed solution preparation step of mixing a magnesium compound, a first hydrocarbon compound, and alcohol to prepare a first mixed solution;
   a viscosity adjustment step of adding a second hydrocarbon compound to the first mixed solution to adjust a viscosity of the first mixed solution;
   a second mixed solution preparation step of adding a first internal electron donor to the first mixed solution having an adjusted viscosity to prepare a second mixed solution; and
   a recrystallization step of adding a transition metal compound to the second mixed solution to perform recrystallization.

2. The method of claim 1, wherein a viscosity range of the first mixed solution after the viscosity adjustment step is 10 cP to 70 cP (when measured at 25°C) .

3. The method of any preceding claim, further comprising: a washing step of washing with the second hydrocarbon compound after the recrystallization step.

4. The method of claim 3, further comprising: a slurry catalyst preparation step of adding the second hydrocarbon compound to prepare a slurry catalyst after the washing step.

5. The method of any preceding claim, wherein a second internal electron donor is further added after adding the transition metal compound.

6. The method of claim 5, wherein a mole ratio between the magnesium compound and the second internal electron donor is 1:0.01 to 1:1.

7. The method of any preceding claim, wherein a mole ratio between the magnesium compound and the second hydrocarbon compound is 1:1.5 to 1:5.

8. The method of any preceding claim, wherein the alcohol is at least one selected from the group consisting of 2-ethylhexanol, methanol, ethanol, propanol, butanol, pentanol, cyclopentanol, hexanol, heptanol, octanol, decanol, dodecanol, 2-methylpentanol, 2-ethylbutanol, cyclohexanol, methylcyclohexnaol, methylbenzyl alcohol and mixtures thereof.

9. The method of any preceding claim, wherein the first hydrocarbon compound is a C9 to C30 hydrocarbon.

10. The method of any preceding claim, wherein the second hydrocarbon compound is a C3 to C8 hydrocarbon.

11. The method of any preceding claim, wherein the first internal electron donor or the second internal electron donor is independently of each other at least one selected from the group consisting of ethyl benzoate, methyl benzoate, ethyl p-methoxybenzoate, methyl p-ethoxybenzoate, ethyl p-ethoxybenzoate, ethyl p-chlorobenzoate, diisobutyl phthalate, 9,9-bis(methoxymethyl)fluorene, propyl benzoate, isopropyl benzoate, dibutyl benzoate, dibutyl 4-(2-aminoethyl) benzoate, ethyl 4-(dimethylamino) benzoate, ethyl 4-(butylamino) benzoate, ethyl 4-(bromomethyl) benzoate, ethyl 4-(benzyloxy) benzoate, methyl 4-(hydroxymethyl) benzoate, methyl 4-(aminomethyl) benzoate, methyl 3-(aminocarbonyl) benzoate, methyl 4-(2-hydroxyethoxy) benzoate, methyl 4-(cyanomethyl) benzoate, methyl 4-(bromomethyl) benzoate, methyl 3-(bromomethyl) benzoate, 1,2-dimethoxybenzene, 1,2-diethoxybenzene, 1,2-dibutoxybenzene, 1,2-di-sec-butoxybenzene, 1,2-di-tert-butoxybenzene, tetramethoxysilane, tetraethoxysilane, tetrapropoxysilane, tetrabutoxysilane, ethyltrimethoxysilane, ethyltriethoxysilane, vinyltrimethoxysilane, methyltrimethoxysilane, n-propyltriethoxysilane, decyltrimethoxysilane, cyclopentyltrimethoxysilane, 2-methylcyclopentyltrimethoxysilane, 2,3-dimethylcyclopentyltrimethoxysilane, phenyltrimethoxysilane, vinyltriethoxysilane, t-butyltriethoxysilane, n-butyltriethoxysilane, isobutyltriethoxysilane, decyltriethoxysilane, cyclopentyltriethoxysilane, cyclohexyltriethoxysilane, chlorotriethoxysilane, ethyltriisopropoxysilane, vinyltributoxysilane, trimethylphenoxysilane, methyltriallyloxysilane, vinyltriacetoxysilane, dimethylmethoxysilane, diisopropyldimethoxysilane, t-butylmethyldimethoxysilane, dicyclopentyldimethoxysilane, dicyclohexyldimethoxysilane, cyclohexylmethyldimethoxysilane, diphenyldimethoxysilane, cyclopentyldimethoxysilane, and mixtures thereof.

12. The method of any preceding claim, wherein a mole ratio between the magnesium compound and the first internal electron donor is 1:0.01 to 1:0.3.

13. The method of any preceding claim, wherein a mole ratio between the magnesium compound and the transition metal compound is 1:2 to 1:5.

14. The method of any preceding claim, wherein the recrystallization step is performed at -7 to 7°C.

15. A method for preparing polyethylene, the method comprising:

provides a polyethylene polymerization catalyst prepared according to any preceding claim; and
polymerizing a monomer using the polyethylene polymerization catalyst, to obtain polyethylene.

FIG. 1

FIG. 2

FIG. 3

SKI 3.0kV 8.7mm x3.00k SE(UL)                    10.0μm

FIG. 4

EP 4 534 571 A1

FIG. 5

SKI 1.0kV 8.3mm x3.00k SE(UL) 10.0μm

FIG. 6

SKI 3.0kV 9.1mm x5.00k SE(UL) 10.0μm

FIG. 7

SKI 5.0kV 6.4mm x5.00k SE(UL) 10.0μm

FIG. 8

Europäisches
Patentamt

European
Patent Office

Office européen
des brevets

# EUROPEAN SEARCH REPORT

Application Number

EP 24 17 4290

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KR 2021 0067341 A (LOTTE CHEMICAL CORP [KR]) 8 June 2021 (2021-06-08) * paragraphs [0039], [0040], [0059]; example all * | 1-15 | INV. C08F110/02 C08F4/651 |
| X | KR 2023 0068100 A (LOTTE CHEMICAL CORP [KR]) 17 May 2023 (2023-05-17) * paragraph [0055]; example all * | 1-6,8-15 | |

TECHNICAL FIELDS
SEARCHED (IPC)

C08F

The present search report has been drawn up for all claims

| Place of search | Date of completion of the search | Examiner |
|---|---|---|
| Munich | 17 October 2024 | Bernhardt, Max |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 17 4290

This annex lists the patent family members relating to the patent documents cited in  the above-mentioned European search report.
The members are as contained in the European Patent Office EDP file on
The European Patent Office is in no way liable for these particulars which are merely given for the purpose of information.

17-10-2024

| Patent document cited in search report | Publication date | Patent family member(s) | Publication date |
|---|---|---|---|
| KR 20210067341 A | 08-06-2021 | NONE | |
| KR 20230068100 A | 17-05-2023 | NONE | |

EPO FORM P0459

For more details about this annex : see Official Journal of the European Patent Office, No. 12/82